# FASCICULE DE BREVET EUROPEEN

(11) **EP 0 639 725 B1**
(45) Date de publication et mention de la délivrance du brevet: **12.05.1999**
(21) Numéro de dépôt: 94401868.8
(22) Date de dépôt: 18.08.1994
(51) Int. Cl.: F16F 1/36, F16F 3/08, B60G 3/28, B60G 11/04

(54) **Suspension élastique**
Elastische Aufhängung
Elastic suspension

(30) Priorité: 20.08.1993 FR 9310146
(43) Date de publication de la demande: 22.02.1995
(73) Titulaire: Sardou, Max, F-77165 Saint-Soupplets (FR)
(72) Inventeur: Sardou, Max, F-77165 Saint-Soupplets (FR)
(74) Mandataire: Flavenot, Bernard

(56) Documents cités:
- EP-A- 0 065 087
- EP-A- 0 200 076
- DE-A- 4 021 158
- DE-B- 1 139 703
- DE-C- 197 917
- FR-A- 2 678 221
- GB-A- N22 472
- US-A- 3 177 963
- US-A- 3 968 958
- PATENT ABSTRACTS OF JAPAN vol. 10, no. 307 (M-527) (2363) 18 Octobre 1986 & JP-A-61 119 827 (NHK SPRING CO.)

## Description

La présente invention concerne les suspensions élastiques destinées à relier deux objets de toute nature aptes à se déplacer l'un par rapport à l'autre, et plus particulièrement les suspensions élastiques pour véhicules, par exemple de type automobiles, notamment les véhicules lourds aptes à se déplacer sur des sols à la surface irrégulière ou accidentée.

Il existe déjà des dispositifs de suspension pour véhicules qui donnent de très bons résultats. Cependant, ces dispositifs de l'art antérieur ne répondent pas aux besoins de certaines applications très particulières, notamment pour des véhicules dans lesquels l'encombrement, le poids et la fiabilité sont des problèmes primordiaux.

Tel est le cas de la suspension décrite dans le FR-A-2 678 221 qui comporte essentiellement une pièce sensiblement en forme de "C" dont les deux extrémités sont respectivement montées en association avec deux objets pouvant se déplacer l'un par rapport à l'autre. La pièce en "C" comporte une âme centrale sensiblement en forme de "C" et deux bandes de renfort plaquées sur les deux faces opposées de cette âme centrale, mais ces deux bandes ne peuvent se transmettre les efforts, ce qui ne permet pas d'obtenir un fonctionnement optimum de la suspension.

La présente invention a ainsi pour but de réaliser une suspension élastique, notamment pour véhicules, qui ait un encombrement très réduit, qui soit relativement légère et qui pallie en grande partie les inconvénients des suspensions comme celle décrite dans ce document antérieur.

Plus précisément, la présente invention a pour objet une suspension élastique destinée à relier deux objets pouvant se déplacer l'un par rapport à l'autre, constituée par au moins une pièce sensiblement en forme de "C" dont les deux extrémités sont respectivement montées en association avec les deux dits objets, ladite pièce en "C" comportant une âme centrale sensiblement en forme de "C", caractérisée par le fait qu'elle comporte en outre un enroulement primaire d'une bande de matériau composite autour et au contact de ladite âme centrale, ledit enroulement primaire étant effectué de façon que la normale à la bande en un point donné de celle-ci soit contenue dans le plan défini par l'âme centrale ou lui reste parallèle et de façon que ladite bande passe autour de chacune des deux dites extrémités.

D'autres caractéristiques et avantages de la présente invention apparaîtront au cours de la description suivante donnée en regard des dessins annexés à titre illustratif mais nullement limitatif dans lesquels:
La figure 1 représente une vue de côté schématique d'une suspension selon l'invention, dans une application comme suspension d'un véhicule, par exemple automobile,
La figure 2 représente, sous forme schématique et partiellement en écorché, un premier mode réalisation de la suspension selon l'invention,
La figure 3 représente, dans une vue en coupe suivant un plan comme le plan II-II défini sur la figure 2, un deuxième mode de réalisation avantageux de la suspension selon l'invention,
La figure 4 représente, dans une vue en coupe suivant un plan comme le même plan II-II défini sur la figure 2, un troisième mode d e réalisation de la suspension selon l'invention, et
La figure 5 représente, sous forme schématique, une partie d'un autre mode de réalisation de la suspension selon l'invention.

Les quatre figures représentent différents modes de réalisation d'une suspension selon l'invention mais les mêmes références y représentent des éléments identiques ou similaires, quelle que soit la figure sur laquelle elles apparaissent.

La suspension selon l'invention trouve une application dans de nombreux domaines pour assurer une suspension élastique entre deux objets pouvant se déplacer l'un par rapport à l'autre, mais elle sera décrite ci-après dans son application comme suspension pour un véhicule 2, par exemple du type automobile ou analogue, apte à se déplacer sur un sol 1 et comportant un châssis 3 et des moyens 8 pour assurer son déplacement sur le sol.

La suspension 9 est constituée par au moins une pièce 10 sensiblement en forme de "C" dont les deux extrémités 11, 12 sont respectivement montées en association avec les deux objets qui, dans l'exemple illustré, sont respectivement constitués par le châssis 3 du véhicule et un bras 5 dont une extrémité 6 est montée en rotation autour d'un axe 13 sur le châssis 3 et dont l'autre extrémité 7 est reliée aux moyens 8 assurant le déplacement du véhicule sur le sol 1 constitués, par exemple, d'une roue, d'un galet de guidage d'une chenille, etc.

Dans l'exemple d'application illustré, la pièce 10 sensiblement en forme de "C" est préférentiellement disposée de façon que son plan général soit perpendiculaire à l'axe de rotation 13 du bras 5 sur le châssis 3 et elle est liée au châssis 3 et au bras 5 de façon que l'axe de rotation 13 du bras 5 sur le châssis soit situé entre deux plans 14, 15 sensiblement parallèles au sol 1 et passant par les deux extrémités 11, 12 de la pièce 10, et même avantageusement sensiblement au milieu de l'espace 16 délimité à l'intérieur de la pièce en "C" 10, et surtout de façon que les deux axes de fixation 111, 112 ou analogues de cette pièce 10 soient sensiblement situés sur une même verticale 110.

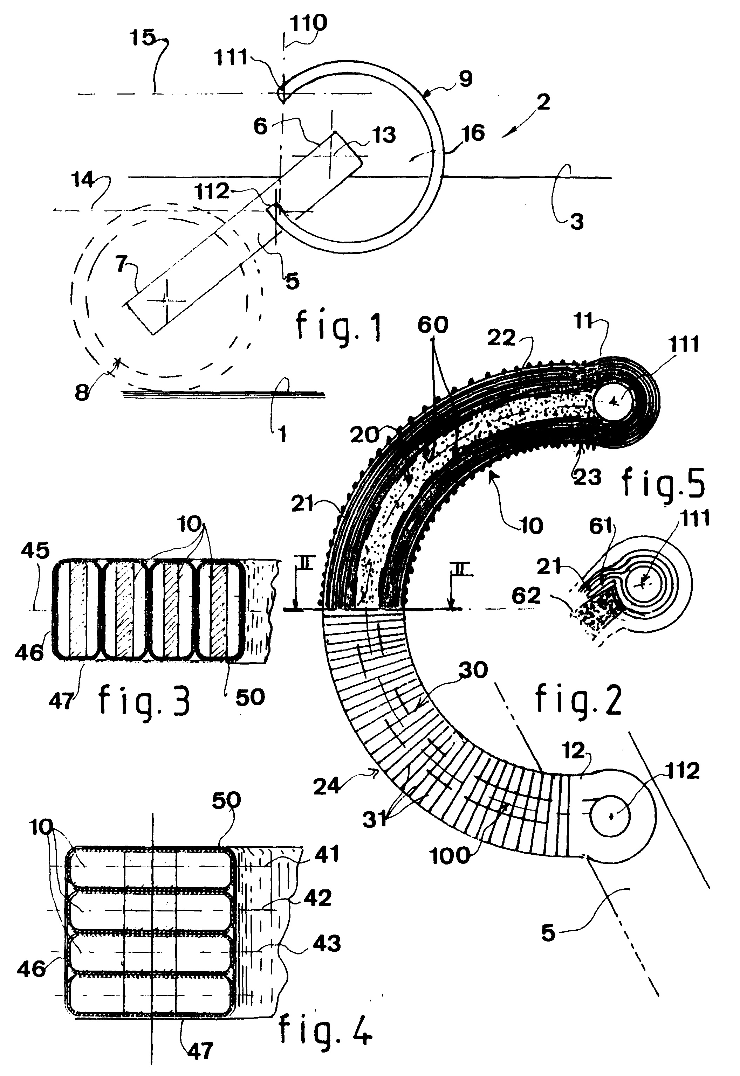

Dans un mode de réalisation préférentiel, la pièce 10 comporte une âme centrale 20 en forme de "C" et un enroulement primaire 21 situé autour et au contact de cette âme centrale 20. Cet enroulement primaire 21 est obtenu par un enroulement dit "sans fin" d'une bande 22 sur l'âme centrale 20 en passant, à chaque extrémité 11, 12 de cette âme centrale, autour d'un tube, portion d'arbre, etc, constituant le moyen de fixation de cette extrémité 11, 12 de la pièce 10 sur l'un des deux objets à relier élastiquement, et de façon que le plan de la bande 22 soit perpendiculaire au plan dudit "C". Cet agencement est confirmé par le fait que, sur la partie écorchée 23 de la figure 2 laissant apparaître l'enroulement primaire 21, cet enroulement primaire est représenté par des traits continus sans grande épaisseur représentant la tranche de la bande puisque la largeur de cette bande est perpendiculaire au plan de la figure 2. La bande 22 aura avantageusement la forme d'un ruban de matériau composite comportant des fibres unidirectionnelles sans fin.

Selon une autre caractéristique avantageuse de l'invention, la pièce en "C" 10 comporte en outre un enroulement secondaire 30 apparaissant sur la partie 24 non écorchée de la figure 2. Cet enroulement secondaire est réalisé autour de l'enroulement primaire et effectué suivant des spires 31 sensiblement centrées sur l'axe longitudinal 100 en forme de "C" de l'âme centrale 20, c'est-à-dire de façon que le plan de chaque spire soit sensiblement perpendiculaire au plan du "C" et donc au plan de la figure 2 ou à celui de l'axe longitudinal de l'âme centrale. Il est bien précisé que les spires 31 sont représentées, sur la figure 2, relativement éloignées les unes des autres pour bien faire comprendre l'invention mais que ces spires seront en réalité beaucoup plus serrées et beaucoup plus nombreuses.

Dans un mode de réalisation possible et avantageux, pour limiter la masse de la pièce 10, l'âme centrale 20 et l'enroulement secondaire 30 sont, eux aussi, réalisés en un matériau composite.

Dans le mode de réalisation décrit ci-dessus, la suspension 9 ne comporte qu'une seule pièce en "C" 10. Cependant, pour certains véhicules qui sont très lourds comme des camions, des blindés sur chenilles, etc, elle peut en comporter une pluralité accolées les unes aux autres.

La suspension 9 peut ainsi être constituée, comme illustré sur la figure 3, d'une pluralité de pièces 10 en forme de "C" disposées les unes par rapport aux autres de façon que l'ensemble de ces pièces soit dans un même plan 45, c'est-à-dire d'une pluralité de pièces en "C" 10 de différentes tailles et s'imbriquant les unes dans les autres pour donner un "C" final de même largeur 46 qu'une seule pièce en "C" mais d'une épaisseur radiale 47 plus grande, en l'occurrence sensiblement égale à m fois l'épaisseur radiale d'une pièce 10 si m est le nombre de pièces imbriquées.

La suspension 9 peut aussi être constituée, comme illustré sur la figure 4, d'une pluralité de pièces en "C" 10 disposées les unes à côté des autres dans des plans 41, 42, 43, ... parallèles et non confondus. En d'autres termes, les pièces 10 sont, dans ce mode de réalisation de la suspension, toutes sensiblement identiques et accolées les unes aux autres pour donner un "C" final de même épaisseur radiale 47 qu'une pièce 10 mais d'une largeur 46 plus grande, en l'occurrence sensiblement égale à n fois celle d'une seule pièce si n est le nombre de pièces accolées.

Dans le but de parfaire l'association des pièces 10 les unes avec les autres, la suspension peut comporter en outre un enroulement tertiaire 50 qui entoure l'ensemble des pièces 10 suivant des spires définies dans des plans sensiblement perpendiculaires à l'axe longitudinal de ces pièces ou de leur âme centrale.

Dans le but de favoriser une certaine indépendance des différentes pièces 10 composant un "C" final selon la figure 3 ou 4, des moyens de séparation peuvent être interposés entre ces pièces 10, comme des feuilles de matériaux connus sous les références commerciales "DINNEMA", "KEVLAR", ou même des feuilles de caoutchouc, ces moyens de séparation permettant en outre d'éviter que des amorces de ruptures se produisant dans l'une des pièces puissent se transmettre aux pièces adjacentes.

Bien entendu, la suspension peut être constituée par une combinaison des deux types d'association des pièces 10 selon les figures 3 et 4. De même, les pièces en "C" 10 peuvent, sans pour autant sortir du cadre de l'invention en ce qui concerne leur mode de réalisation, comporter des parties renforcées aux endroits où des efforts plus intenses sont susceptibles de s'appliquer, par exemple une épaisseur plus importante de l'enroulement secondaire 30.

Dans une réalisation perfectionnée, la suspension selon l'invention comporte en outre, dans le but d'obtenir un meilleur amortissement, une couche intermédiaire d'un matériau élastique 60 interposée entre l'âme centrale 20 et l'enroulement primaire 21. Cette couche intermédiaire peut être réalisée en un matériau comme du caoutchouc ou un mélange de silicone et de caoutchouc ou analogue.

De plus, l'âme centrale 20 est de préférence réalisée en un matériau constituant un puits thermique pour favoriser l'évacuation des calories dues à la transformation de l'énergie mécanique en énergie calorifique. Dans ce but, I'âme centrale peut être réalisée dans un matériau métallique ou analogue, et avantageusement dans un matériau plastique ou analogue dans lequel sont noyées des particules métalliques, par exemple d'aluminium ou analogue.

Dans le cas où les axes de fixation 111 et 112 ne sont pas directement solidaires de l'âme centrale 20, ou pour renforcer leur attache avec cette âme centrale, lorsque l'enroulement primaire 21 de la bande 22 est constitué en couches superposées il est avantageux que les toutes premières couches de l'enroulement primaire 21 soient enroulées, au contraire de l'enroulement illustré sur la figure 2, de façon à entourer presque complètement les axes 111, 112 et à repasser sur la face convexe 62 de l'âme centrale 20. Ces parties d'enroulements constituent un moyen de solidarisation des deux axes avec l'âme centrale 20.

## Revendications

1. Suspension élastique (9) destinée à relier deux objets (3, 5) pouvant se déplacer l'un par rapport à l'autre, constituée par au moins une pièce (10) sensiblement en forme de "C" dont les deux extrémités (11, 12) sont respectivement montées en association avec les deux dits objets (3, 5), ladite pièce en "C" comportant une âme centrale (20) sensiblement en forme de "C", caractérisée par le fait qu'elle comporte en outre un enroulement primaire (21) d'une bande (22) de matériau composite autour et au contact de ladite âme centrale, ledit enroulement primaire étant effectué de façon que la normale à la bande en un point donné de celle-ci soit contenue dans le plan défini par l'âme centrale ou lui reste parallèle et de façon que ladite bande passe autour de chacune des deux dites extrémités.

2. Suspension selon la revendication 1, caractérisée par le fait que ladite pièce en "C" (10) comporte en outre un enroulement secondaire (30) situé autour dudit enroulement primaire (21), cedit enroulement secondaire étant constitué de spires (31) sensiblement centrées sur l'axe longitudinal (100) de ladite âme centrale (20) et définies dans des plans sensiblement perpendiculaires à l'axe longitudinal de ladite âme centrale.

3. Suspension selon la revendication 2, caractérisée par le fait que ladite âme centrale (20) et ledit enroulement secondaire (30) sont réalisés en un matériau composite.

4. Suspension selon l'une des revendications 1 à 3, caractérisée par le fait qu'elle est constituée d'une pluralité de pièces en forme de "C" (10) associées les unes aux autres dans des plans (41, 42, 43) parallèles et non confondus.

5. Suspension selon l'une des revendications 1 à 3, caractérisée par le fait qu'elle est constituée d'une pluralité de pièces en forme de "C" (10) associées les unes aux autres de façon que l'ensemble desdites pièces soit dans un même plan (45).

6. Suspension selon l'une des revendications 4 et 5, caractérisée par le fait qu'elle comporte, entre chaque pièce en "C" (10), des moyens de séparation.

7. Suspension selon l'une des revendications 4 à 6, caractérisée par le fait qu'elle comporte en outre un enroulement tertiaire (50) entourant l'ensemble desdites pièces en "C" accolées les unes aux autres, suivant des spires définies dans des plans sensiblement perpendiculaires à l'axe longitudinal desdites pièces.

8. Suspension selon l'une des revendications 1 à 7, caractérisée par le fait que ladite bande (22) a la forme d'un ruban de matériau composite comportant des fibres unidirectionnelles sans fin.

9. Suspension selon l'une des revendications 1 à 8, caractérisée par le fait qu'elle comporte en outre, interposée entre ladite âme centrale (20) et ledit enroulement primaire (21) d'une bande (22) de matériau composite, une couche intermédiaire d'un matériau élastique.

10. Suspension selon l'une des revendications 1 à 9, caractérisée par le fait que ladite âme centrale (20) est réalisée en un matériau constituant un puits thermique.

11. Suspension selon l'une des revendications 1 à 10 lorsque ledit enroulement primaire (21) de ladite bande (22) est constitué en couches superposées et lorsqu'elle comporte, à chacune des extrémités de ladite âme centrale (20), un axe de fixation (111, 112), caractérisée par le fait que les toutes premières couches de l'enroulement primaire (21) sont enroulées de façon à entourer presque complètement lesdits axes de fixation (111, 112) et à repasser sur la face convexe (62) de l'âme centrale (20).

## Patentansprüche

1. Elastische Aufhängung (9) zum Verbinden zweier gegeneinander verschiebbarer Objekte (3, 5), die aus mindestens einem im wesentlichen "C"-förmigen Teil (10) gebildet ist, dessen beide Enden (11, 12) jeweils in Verbindung mit den beiden Objekten (3, 5) montiert sind, wobei der "C"-förmige Teil einen im wesentlichen "C"-förmigen zentralen Kern (20) umfaßt, dadurch gekennzeichnet, daß sie femer eine Primärwicklung (21) eines Bandes (22) aus Verbundwerkstoff um den zentralen Kem herum und in Kontakt mit diesem umfaßt, wobei die Primärwicklung so ausgeführt ist, daß die Normale auf das Band in einem gegebenen Punkt von diesem in der Ebene liegt, die durch den zentralen Kem definiert ist oder parallel hierzu liegt, und das Band um jedes der beiden Enden herum verläuft.

2. Aufhängung nach Anspruch 1, dadurch gekennzeichnet, daß der "C"-förmige Teil (10) ferner einer Sekundärwicklung (30) umfaßt, die um die Primärwicklung (21) herum angeordnet ist, wobei die Sekundärwicklung aus Windungen (31) gebildet ist, die im wesentlichen zentrisch auf der Längsachse (100) des zentralen Kems (20) angeordnet und in im wesentlichen zur Längsachse des zentralen Kems senkrechten Ebenen definiert sind.

3. Aufhängung nach Anspruch 2, dadurch gekennzeichnet, daß der zentrale Kern (20) und die Sekundärwicklung (30) aus einem Verbundwerkstoff realisiert sind.

4. Aufhängung nach einem der Ansprüche 1 bis 3, dadurch gekennzeichnet, daß sie aus einer Vielzahl von "C"-förmigen Teilen (10) gebildet ist, die miteinander in parallelen und nicht ineinander verlaufenden Ebenen (41, 42, 43) verbunden sind.

5. Aufhängung nach einem der Ansprüche 1 bis 3, dadurch gekennzeichnet, daß sie aus einer Vielzahl von "C"-förmigen Teilen (10) gebildet ist, die miteinander so verbunden sind, daß die Gesamtheit dieser Teile in derselben Ebene (45) liegt.

6. Aufhängung nach einem der Ansprüche 4 und 5, dadurch gekennzeichnet, daß sie zwischen jedem "C"-förmigen Teil (10) Separationsmittel umfaßt.

7. Aufhängung nach einem der Ansprüche 4 bis 6, dadurch gekennzeichnet, daß sie ferner eine Tertiärwicklung (50) umfaßt, die die Gesamtheit der aneinander gefügten "C"-förmigen Teile umgibt, wobei sie Windungen folgt, die in den im wesentlichen zur Längsachse der Teile senkrechten Ebenen definiert sind.

8. Aufhängung nach einem der Ansprüche 1 bis 7, dadurch gekennzeichnet, daß das Band (22) die Form eines unidirektionale Endlosfasem umfassenden Streifens aus Verbundwerkstoff hat.

9. Aufhängung nach einem der Ansprüche 1 bis 8, dadurch gekennzeichnet, daß sie femer eine Zwischenschicht aus elastischem Material umfaßt, die zwischen dem zentralen Kem (20) und der Primärwicklung (21) aus einem Band (22) aus Verbundwerkstoff eingefügt ist.

10. Aufhängung nach einem der Ansprüche 1 bis 9, dadurch gekennzeichnet, daß der zentrale Kem (20) aus einem eine thermische Senke bildenden Material realisiert ist.

11. Aufhängung nach einem der Ansprüche 1 bis 10, wenn die Primärwicklung des Bandes (22) in übereinander angeordneten Schichten gebildet ist und wenn sie an jedem der Enden des zentralen Kerns (20) einen Verbindungsbolzen (111, 112) umfaßt, dadurch gekennzeichnet, daß die allerersten Schichten der Primärwicklung (21) so gewickelt sind, daß sie die Verbindungsbolzen (111, 112) fast völlig umgeben und wieder auf die konvexe Fläche (62) des zentralen Kerns (20) zurückkehren.

## Claims

1. An elastic suspension (9) for interconnecting two objects (3, 5) capable of moving one relative to the other, the suspension being constituted by at least one substantially C-shaped piece (10) whose two ends (11, 12) are respectively mounted in association with said two objects (3, 5), said C-shaped piece comprising a substantially C-shaped central core (20), the suspension being characterized by the fact that it further comprises a primary winding (21) of a strip (22) of composite material around and in contact with said central core, said primary winding being performed in such a manner that the normal to the strip at any given point thereof is contained in or remains parallel to the plane defined by the central core so that said strip passes around each of the two said ends.

2. A suspension according to claim 1, characterized by the fact that said C-shaped piece (10) further comprises a secondary winding (30) situated around said primary winding (21), said secondary winding being constituted by turns (31) substantially centered on the longitudinal axis (100) of said central core (20) and defined in planes that are substantially perpendicular to the longitudinal axis of said central core.

3. A suspension according to claim 2, characterized by the fact that said central core (20) and said secondary winding (30) are made of composite material.

4. A suspension according to any one of claims 1 to 3, characterized by the fact that it is constituted by a plurality of C-shaped pieces (10) associated with each other in planes (41, 42, 43) that are parallel and do not coincide.

5. A suspension according to any one of claims 1 to 3, characterized by the fact that it is constituted by a plurality of C-shaped pieces (10) associated with one another in such a manner that all of said pieces lie in a common plane (45).

6. A suspension according to claim 4 or 5, characterized by the fact that it includes separator means between the C-shaped pieces (10).

7. A suspension according to any one of claims 4 to 6, characterized by the fact that it further comprises a tertiary winding (50) surrounding all of said side-by-side C-shaped pieces with turns defined in planes that are substantially perpendicular to the longitudinal axis of said pieces.

8. A suspension according to any one of claims 1 to 7, characterized by the fact that said strip (22) is in the form of a tape of composite material having endless unidirectional fibers.

9. A suspension according to any one of claims 1 to 8, characterized by the fact that it further comprises an intermediate layer of an elastic material interposed between said central core (20) and said primary winding (21) of a strip (22) of composite material.

10. A suspension according to any one of claims 1 to 9, characterized by the fact that said central core (20) is made of a material constituting a heat sink.

11. A suspension according to any one of claims 1 to 10 when said primary winding (21) of said strip (22) is made up of superposed layers and when it includes a fixing pin (111, 112) at each of the ends of said central core (20), the suspension being characterized by the fact that the first layers of the primary winding (21) are wound in such a manner as to surround said fixing pins (111, 112) almost completely and pass back over the convex face (62) of the central core (20).
